# EUROPEAN PATENT APPLICATION

(11) **EP 4 552 447 A1**
(43) Date of publication of application: **14.05.2025**
(21) Application number: 23835774.3
(22) Date of filing: 03.07.2023
(51) Int. Cl.: A01B 33/08, F16C 17/24, F16H 61/438

(54) **BEARING FOR SUPPORTING SWASH PLATE OF HYDRAULIC STATIC TRANSMISSION**

(30) Priority: 04.07.2022 KR 20220082066; 30.06.2023 KR 20230084938
(71) Applicant: LS Mtron Ltd., Anyang-si, Gyeonggi-do 14119 (KR); J.I Hydraulic Co.,Ltd, Changwon-si, Gyeongsangnam-do 51787 (KR)
(72) Inventor: CHEONG, Seung Ho, Anyang-si Gyeonggi-do 14119 (KR); HA, Jong Kyou, Anyang-si Gyeonggi-do 14119 (KR); LEE, Sang Ho, Changwon-si Gyeongsangnam-do 51270 (KR)
(74) Representative: K&L Gates LLP
(86) International application number: PCT/KR2023/009328
(87) International publication number: WO 2024/010308

(57) **Abstract**

The present invention is directed to a bearing for supporting a swash plate of a hydraulic static transmission. According to the present invention, there is disclosed a technology in which plates made of aluminum and Teflon materials are coupled to each other or separate fixation portions that do not come into contact with a support are formed and fixed to the support. The control for neutral return is facilitated, and the manufacturability and versatility are improved.

## Description

### Technical Field

The present invention relates to a bearing for supporting a swash plate in a hydraulic static transmission.

### Background Art

Hydraulic static transmissions are installed in work vehicles that frequently perform gear-ratio shifting due to the nature of their driving. In particular, hydraulic static transmissions are appropriately applied to agricultural work vehicles (farm tractors, combines, rice transplanters, etc.).

Hydraulic static transmissions continuously perform gear-ratio shifting, and consist of a hydraulic motor, a hydraulic pump, etc.

The hydraulic motor generates rotational force on the output shaft thereof by means of the hydraulic pressure attributable to the flow rate of the working fluid provided from the hydraulic pump.

The hydraulic pump is operated by the rotational force output from an engine, and sucks fluid and then provides flow rate to the hydraulic motor. In other words, the hydraulic pump provides hydraulic pressure to the hydraulic motor, and the hydraulic motor is operated by the hydraulic pressure provided from the hydraulic pump.

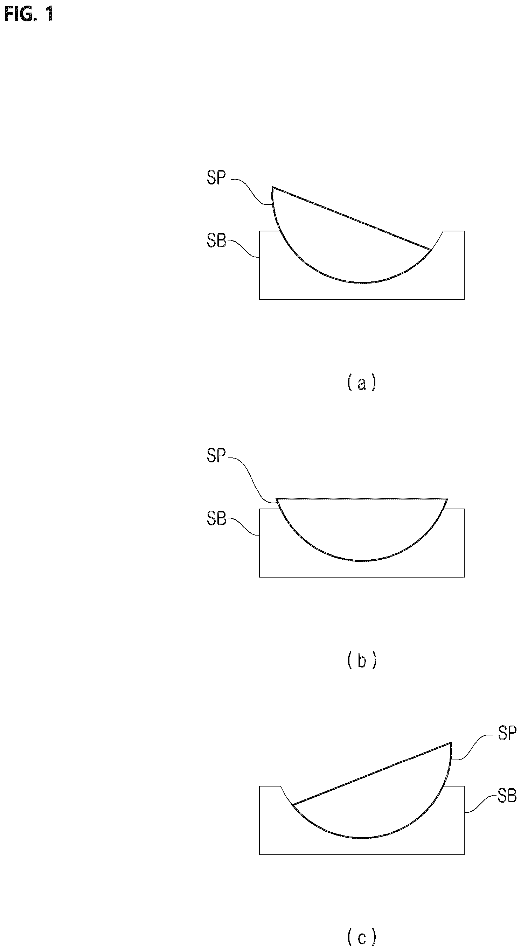

The hydraulic pump is provided with a swash plate for gear-ratio shifting, and gear-ratio shifting is performed as the angular position of the swash plate is changed by rotation. Furthermore, forward or reverse shifting can be performed depending on the rotation direction of the swash plate in a neutral position. For example, FIG. 1 shows various angular positions of a swash plate SP in relation to a support SB (also called a 'guide'). FIG. 1(a) shows a forward driving state, FIG. 1(b) shows a neutral (stationary) state, and FIG. 1(c) shows a reverse driving state.

Such a hydraulic static transmission performs continuous acceleration and deceleration gear-ratio shifting as the flow rate provided to the hydraulic motor is varied according to the angular position of the swash plate SP. In other words, the hydraulic pump is provided as a capacity variation type that performs gear-ratio shifting by the variation of the flow rate provided to the hydraulic motor. Furthermore, the extent of capacity variation is determined by the angular position (the rotation direction and amount) of the swash plate SP.

Furthermore, recently, there are cases where a swash plate SP is applied to a hydraulic motor to vary the torque of the output shaft.

A lot of friction and heat are generated when the swash plate SP rotates to change its angular position. Accordingly, a metal bearing is installed on the support SB to ensure the smooth rotation of the swash plate SP. In other words, the swash plate SP does not come into direct contact with the support SB, but rather the bearing is interposed between the swash plate SP and the support SB.

Generally, a change in the angular position of the swash plate SP is performed in response to a driver's operation.

Therefore, when there is no driver's operation, the angular position of the swash plate SP needs to return to a neutral return angle. In this case, the neutral return angle refers to the angular position of the swash plate SP within the range where the output shaft of the hydraulic static transmission can stop by itself. For example, when the swash plate SP returns to a position within the neutral return angle, the swash plate SP can theoretically be returned to its neutral position of 0 degrees by the slip between the swash plate SP and the bearing.

Meanwhile, the frictional resistance between the swash plate SP and the bearing acts as an obstacle to returning the angular position of the swash plate SP to the neutral position. That is, when the frictional resistance between the swash plate SP and the bearing is large, it may be difficult for the swash plate SP to return to the neutral position.

The frictional resistance may vary depending on the shape and material of the bearing.

Meanwhile, a driver's operation can be input to the swash plate SP electronically or mechanically. In either case, a mechanical structure is required to input rotational force to the swash plate SP.

The tolerance of the mechanical structure needs to be managed to the extent that the swash plate SP can be returned to a position within the neutral return angle.

When the neutral return angle is large, the tolerance of the mechanical structure may be managed somewhat more generously.

In contrast, when the neutral return angle is small, the tolerance of the mechanical structure also needs to be precisely managed. Furthermore, the swash plate SP may easily fail to return to the neutral position. Moreover, all of these points entail an increase in the manufacturing cost.

Meanwhile, depending on the specifications of the bearing, the neutral return angle may be small or large.

When a bearing having high performance is applied, the neutral return angle may be large. Furthermore, when the neutral return angle is large, tolerance management becomes easier, so that the manufacturing cost can be reduced and the reliability of the equipment can be improved.

Since the present invention relates to a bearing, a conventional bearing will be described in more detail below.

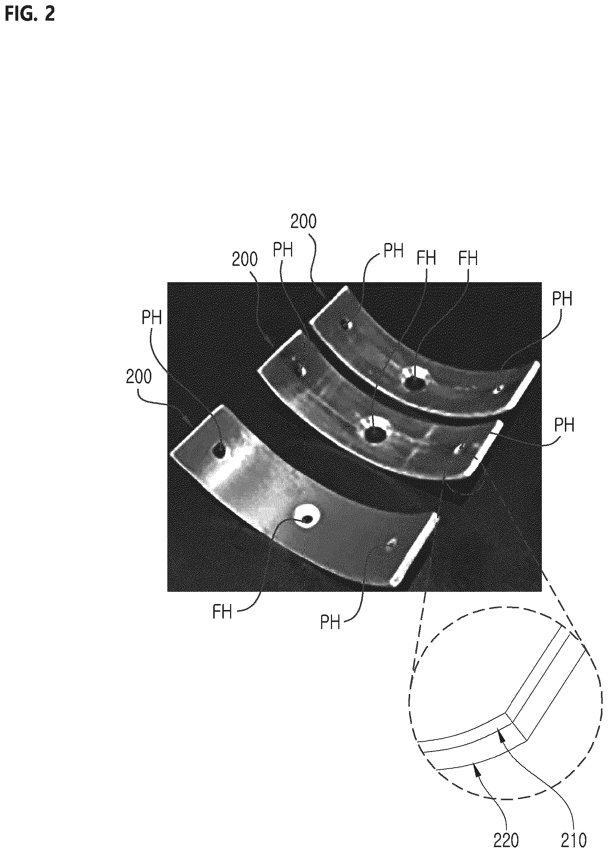

As shown in FIG. 2, a conventional bearing 200 includes a first plate 210 made of a synthetic resin material and a second plate 220 made of a metal material.

The first plate 210 is made of a polytetrafluoroethylene (commonly called 'Teflon') material.

The second plate 220 is made of a steel material.

A fixation hole FH is formed in the central region of the bearing 200, and positioning holes PH are formed on both sides of the fixation hole FH.

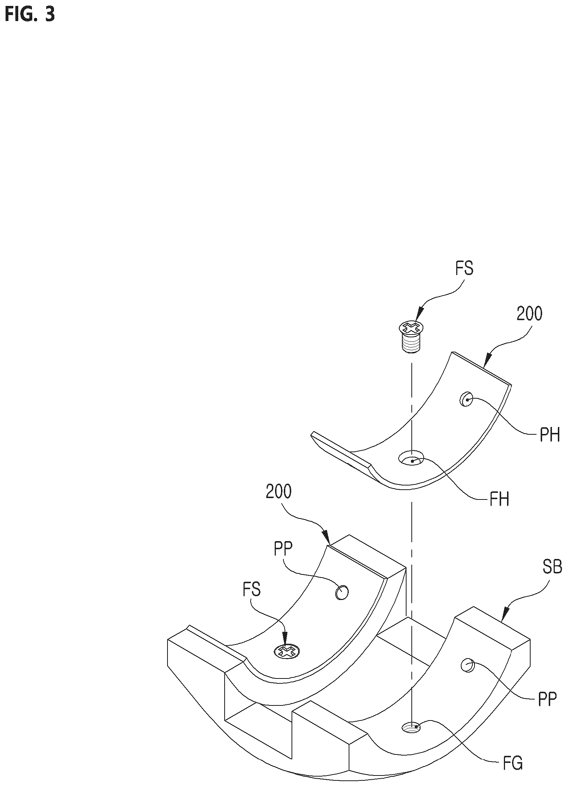

FIG. 3 shows the coupling relationship between a support SB, on which the bearing 200 of FIG. 2 is mounted, and the bearing 200.

A threaded fixation blind hole FG is formed in the center region of the support SB at a position corresponding to the fixation hole FH. Furthermore, positioning protrusions PP are formed at positions corresponding to the positioning holes PH on both sides of the threaded fixation blind hole FG.

A fixation screw FS fixes the bearing 200 onto the support SB by using the fixation hole FH and the threaded fixation blind hole FG.

The fixation screw FS needs to be tightened securely so that the bearing 200 and the support SB come into close contact with each other. That is, there should be no space between the bearing 200 and the support SB. This allows the swash plate SP to be appropriately assembled.

Usually, the swash plate SP rotates in the state of being in close contact with the bearing 200. Accordingly, when the slip between the swash plate SP and the bearing 200 is not appropriate, the surface (the contact surface) of the first plate 210 is pushed by frictional resistance. That is, there occurs the phenomenon in which the surface of a polytetrafluoroethylene material is pushed and rolled by frictional resistance. This phenomenon is prevented by the positioning protrusions PP that are arranged on both sides of the fixation screw FS and hold the position of the bearing 200.

However, according to the conventional bearing 200, there are the following problems.

First, the manufacturability of the bearing 200 is poor due to the thickness of the second plate 220 made of a steel material.

The fixation screw FS and the swash plate SP should not interfere with each other. Accordingly, the head of the fixation screw FS needs to be deeply embedded such that it does not protrude further from the surface of the bearing 200. To this end, the second plate 220 needs to be able to secure the depth For this reason, the thickness of the second plate 220 increases, and the rigidity increases accordingly, making it difficult to fabricate the shape of the second plate 220.

Second, the assembly performance decreases due to the shape restoring force.

Even when the shape of the second plate 220 is fabricated, the shape of the second plate 220 may be restored by its own elastic restoring force. In this case, the work of fixing the bearing 200 onto the support SB becomes difficult.

Third, the manufacturing efficiency of the bearing 200 decreases.

A total of three holes FH and PH are formed in the bearing 200. The surfaces of the bearing 200 become rough due to burrs and/or the like that are generated when the holes FH and PH are formed. Then, scratching and/or the like occur on the swash plate SP and frictional resistance increases, so that the surfaces of the bearing 200 need to be smoothed after the hole formation process. Furthermore, the manufacturing efficiency decreases accordingly.

Fourth, the uniformity of dimensions may not be guaranteed for individual products.

For example, the dimensions of the holes FH and PH may not be exactly the same for individual products. In this case, the surface friction coefficient may be different for each of the products. In this case, the reliability of products decreases due to the non-uniformity between the characteristics of individual finished products (swash plate assemblies).

Fifth, there is the inconvenience of having to form the separate positioning protrusions PP on the support SB.

Sixth, it is difficult to manage the friction coefficient, so that it is necessary to maintain a small neutral return angle, with the result that it is necessary to precisely perform the management of the tolerance of a related mechanical structure or control design. Furthermore, this ultimately increases the manufacturing cost.

### Disclosure

### Technical Problem

The present invention was conceived from the consideration of a technology that can overcome the problems mentioned above.

### Technical Solution

A bearing for supporting the swash plate of a hydraulic static transmission according to a first aspect of the present invention is a bearing for supporting a swash plate that is coupled to a support adapted to support a swash plate applied to a hydraulic static transmission and is provided to reduce friction that occurs between the swash plate and the support when the swash plate rotates, the bearing includes: a first plate provided with a contact surface that comes into contact with the swash plate curved surface of the swash plate on one side thereof, and made of a synthetic resin material; and a second plate formed in a shape rounded to have a curvature, configured to be superimposed on the first plate to come into close contact with the other surface of the first plate and retain the shape of the first plate, and made of a metal material; and the first plate is made of a polytetrafluoroethylene material.

It may be preferably contemplated that the second plate is made of an aluminum material.

The thickness of the first plate is 0.36 mm.

The friction coefficient of the contact surface is managed to be 0.003 to 0.005.

The friction coefficient of the contact surface has a value that makes the neutral return angle of the swash plate 0.8 to 1.5 degrees.

The first plate has internal cores positioned between the one surface and the other surface, and the internal cores are made of a metal material.

The internal cores may be arranged in a mesh form.

The first plate includes a contact portion provided with the contact surface, and first fixation portions configured to be bent at both ends of the contact portion and then extend with the contact portion interposed therebetween, and to be fixed to the support; the second plate includes a coupling portion that is coupled to the contact portion, and second fixation portions configured to be bent at both ends of the coupling portion and then extend with the coupling portion interposed therebetween, and to be fixed to the support together with the first fixation portions; and the first fixation portions and the second fixation portions do not come into contact with the swash plate.

A bearing for supporting the swash plate of a hydraulic static transmission according to a second aspect of the present invention is a bearing for supporting a swash plate that is coupled to a support adapted to support a swash plate applied to a hydraulic static transmission and is provided to reduce friction that occurs between the swash plate and the support when the swash plate rotates, the bearing includes: a first plate provided with a contact surface that comes into contact with the swash plate curved surface of the swash plate on one side thereof, and made of a synthetic resin material; and a second plate formed in a shape rounded to have a curvature, configured to be superimposed on the first plate to come into close contact with the other surface of the first plate and retain the shape of the first plate, and made of a metal material; and the first plate has internal cores positioned between the one surface and the other surface.

### Advantageous Effects

According to the present invention, the following effects are achieved.

First, the manufacturability of the bearing is improved by applying the second plate that is made of an aluminum material while being thinner than the conventional one.

Second, the shape retention of the second plate is improved, so that the assembling efficiency is improved.

Third, fixation means are removed from the area where there is the contact surface that comes into contact with a swash plate, so that the manufacturing efficiency of the bearing is improved.

Fourth, at least the uniformity of the contact surface is guaranteed, so that the reliability of products is improved

Fifth, there is no need to form separate positioning protrusions on the support and the longitudinal holes are applied, so that the versatility of the bearing is improved.

Sixth, an appropriately large neutral return angle may be obtained as required, so that the manufacturing cost can be reduced.

### Description of Drawings

FIG. 1 is a reference view illustrating gear-ratio shifting according to the angular position of a swash plate;
FIG. 2 is a reference diagram illustrating a conventional bearing,
FIG. 3 is a reference view illustrating the coupling relationship between the bearing of FIG. 2 and a support;
FIG. 4 is a schematic perspective view of a bearing according to one embodiment of the present invention;
FIG. 5 is a schematic exploded view of the bearing of FIG. 4;
FIG. 6 is a sectional photograph of the bearing of FIG. 4; and
FIG. 7 is a reference view illustrating the coupling relationship between the bearing of FIG. 4 and a support.

### Mode for Invention

Preferred embodiments according to the present invention will be described with reference to the accompanying drawings, but for the sake of brevity, descriptions of well-known components will be omitted or abridged as much as possible.

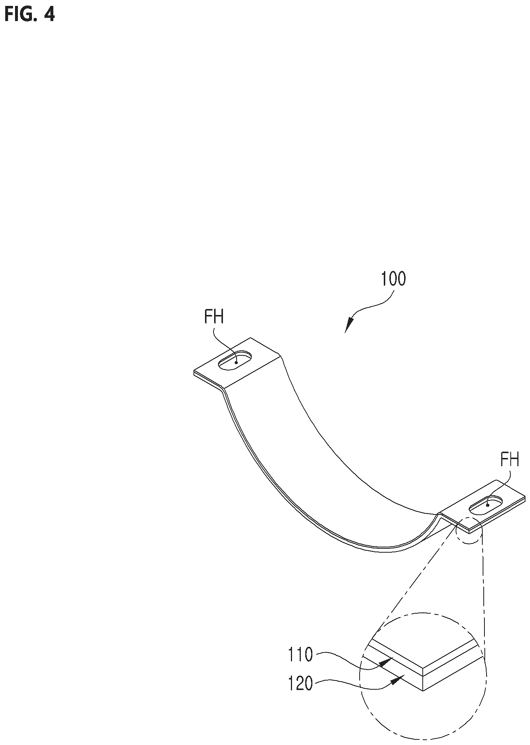

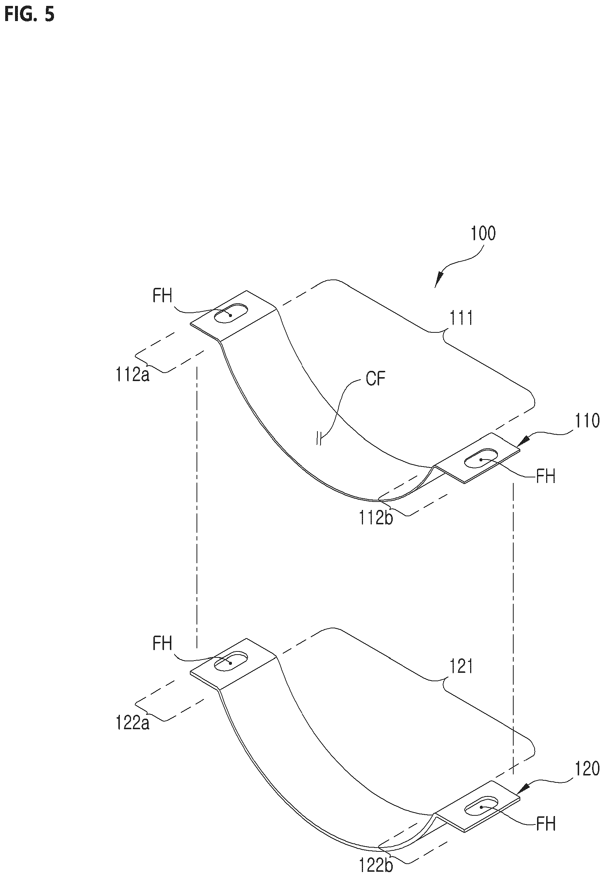

FIG. 4 is a schematic perspective view of a bearing 100 for supporting the swash plate of a hydraulic static transmission (hereinafter abbreviated to 'bearing') according to one embodiment of the present invention, and FIG. 5 is a schematic exploded view of the bearing 10 of FIG. 4.

Referring to FIGS. 4 and 5, the bearing 100 according to the present embodiment includes a first plate 110 and a second plate 120.

The first plate 110 is made of a synthetic resin material. More specifically, the first plate 110 is made of a polytetrafluoroethylene material.

The first plate 110 includes a contact portion 111 and first fixation portions 112a and 112b.

The contact portion 111 has a contact surface CF that comes into contact with a swash plate SP on one side thereof.

The contact surface CF comes into contact with the curved surface of a swash plate having a circular curvature in the form of an arc. Accordingly, the contact portion 111 is fabricated in a rounded shape to have a curvature that matches the shape of the curved surface of the swash plate.

The first fixation portions 112a and 112b are fixed to a support SB.

The first fixation portions 112a and 112b are formed by extending from both ends of the contact portion 111.

The first fixation portions 112a and 112b on both sides are bent at both ends of the contact portion 111 and then extend with the contact portion 111 interposed therebetween. The directions in which the first fixation portions 112a and 112b are bent are the directions that are away from a swash plate SP. Accordingly, the first fixation portions 112a and 112b do not come into contact with the swash plate SP.

The second plate 120 is made of a metal material. According to a preferred example of the present invention, the second plate 120 is made of an aluminum material. The aluminum material has desirable machinability and shape retention. The second plate 120 serves to retain the shape of the first plate 110 by reinforcing the rigidity.

The second plate 120 includes a coupling portion 121 and second fixation portions 122a and 122b.

The coupling portion 121 is coupled to the other surface of the contact portion 111. Accordingly, the coupling portion 121 is fabricated in a rounded shape to have a curvature that matches the shape of the contact portion 111. That is, according to the present embodiment, one surface of the first plate 110 has the contact surface CF that comes into contact with the curved surface of the swash plate, and the other surface of the first plate 110 is superimposed on the second plate 120 to come into close contact with it.

The second fixation portions 122a and 122b are coupled to the first fixation portions 112a and 112b. Furthermore, the second fixation portions 122a and 122b are fixed to the support SB while being coupled to the first fixation portions 112a and 112b.

The second fixation portions 122a and 122b are formed by extending from both ends of the coupling portion 121.

The second fixation portions 122a and 122b on both sides are bent at both ends of the coupling portion 121 and then extend with the coupling portion 121 interposed therebetween. The directions in which the second fixation portions 122a and 122b are bent are the directions that are away from the swash plate SP.

Accordingly, the first fixation portions 112a and 112b and the second fixation portions 122a and 122b do not come into contact with the swash plate SP. This means that there is no need to take into consideration the frictional resistance between the first fixation portions 112a and 112b and the swash plate SP.

The first plate 110 and the second plate 120 have the same shape, and are coupled to be superimposed on each other.

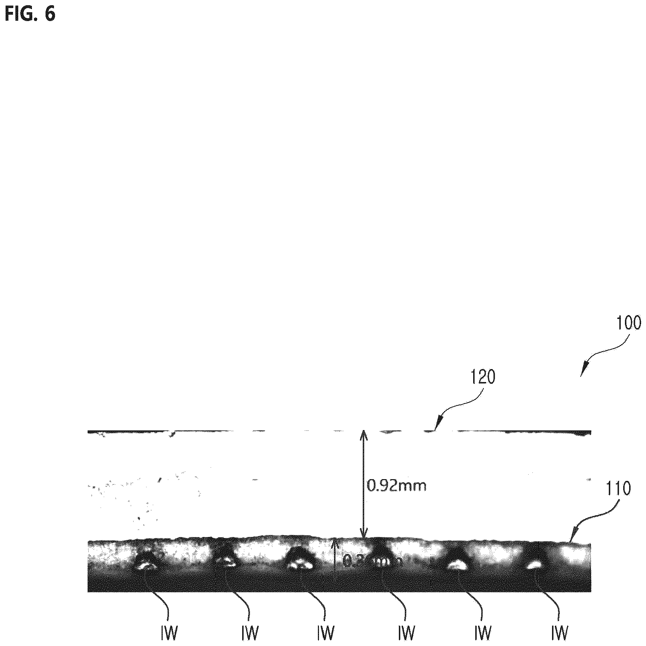

Meanwhile, referring to the sectional photograph of FIG. 6, the first plate 110 has a thickness of approximately 0.36 mm, and the second plate 120 has a thickness of approximately 0.92 mm.

As confirmed through many experiments, the friction coefficient of the contact surface CF increases as the thickness of the first plate 110 increases. Conventionally, the friction coefficient of the contact surface CF has been managed in the range of 0.010 to 0.020. However, when the thickness of the first plate 110 is 0.36 mm as in the present embodiment, the friction coefficient of the contact surface CF decreases to 0.003. However, it was observed that when the thickness of the first plate 110 was narrower than 0.36 mm, the durability of the bearing 100 decreased.

The friction coefficient of the contact surface CF is related to the neutral return angle.

When the friction coefficient of the contact surface CF is set to 0.010 or more as in the conventional practice, the neutral return angle becomes 0.3 to 0.5 degrees. In contrast, when the friction coefficient of the contact surface CF is set to 0.003 as in the present embodiment, the neutral return angle becomes 0.8 degrees or more. This means that the design for returning the swash plate SP to a neutral position becomes simpler when following the present embodiment. According to an experiment based on an embodiment to which the present invention was applied, it was found that even when the friction coefficient of the contact surface CF become 0.005, the neutral return angle could be maintained to be larger than 0.8 degrees.

It is obvious that even when the neutral return angle is excessively large, the neutral departure angle becomes large. In this case, the neutral departure angle refers to the angular position of the swash plate SP at which an output shaft reacts and rotates when the swash plate SP in the neutral position rotates.

For example, when the neutral departure angle is large, the response of the output shaft to a driver's operation becomes slow. In particular, in most cases, the neutral departure angle is larger than the neutral return angle. Accordingly, it is necessary to consider that the neutral departure angle also increases proportionally even when the neutral return angle is excessively large. Therefore, in the present invention, the friction coefficient of the contact surface CF is managed to be 0.003 to 0.005, and the neutral return angle is managed to be 0.8 to 1.5 degrees.

According to the present embodiment, the thickness of the second plate 120 is 0.92 mm, which is about half the thickness of the conventional plate. The reason why the thickness may be made thin is that the bearing 100 has the separate fixation portions 112a and 112b, and 122a and 122b in the regions that do not come into contact with the swash plate SP. That is, the thickness of the second plate 120 may be significantly reduced because the bearing 100 is coupled to the support SB by the separate fixation portions 112a and 112b, and 122a and 122b that are not related to the contact with the swash plate SP.

The thickness of the second plate 120 may be made thin in this manner, and thus, the formability of the bearing 100 is further improved. Furthermore, the second plate 120 is made of an aluminum material, so that it is lighter, and also has desirable shape retention, so that the assembly of the bearing 100 to the support SB is improved.

Referring to FIG. 6 again, it can be seen that internal cores IW are arranged in the first plate 110.

The internal cores IW are intended to prevent the phenomenon in which the first plate 110 is pushed and rolled by friction with the swash plate SP. To this end, the internal cores IW need to be made of a material more rigid than that of the first plate 110. More specifically, in the present embodiment, the internal cores IW are made of a metal material. In particular, the internal cores IW may be made of a steel material having desirable rigidity. The internal cores IW serve to resist to prevent the first plate 110 from being pushed even when frictional resistance occurs between the rotating swash plate SP and the contact surface CF.

The internal cores IW resist to prevent the first plate 110 from being rolled in this manner, and thus, separate positioning holes PH or positioning protrusions PP are not required according to the present invention.

The internal cores IW may be designed to be arranged in a mesh form. The mesh form arrangement allows the internal cores IW to retain the shape of the first plate 110 against the frictional forces that may be applied from various directions. Meanwhile, fixation holes FH are formed in the first fixation portions 112a and 112b and the second fixation portions 122a and 122b.

The bearing 100 according to the present invention is used in a structure that supports the swash plate SP of a hydraulic static transmission

A hydraulic pump and a hydraulic motor are paired and provided in a hydraulic static transmission The swash plate SP is provided in the hydraulic pump, and recently, it is also provided in the hydraulic motor.

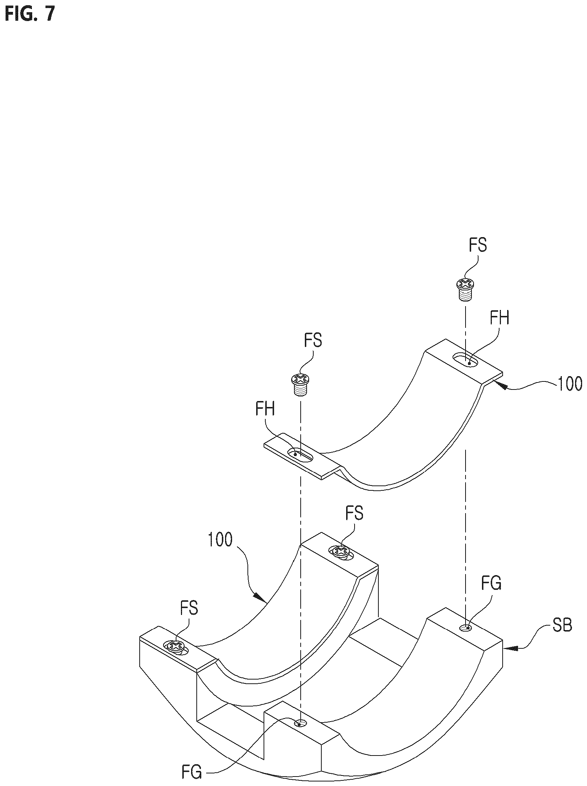

As shown in the reference view of FIG. 7, the swash plate SP is usually installed to be supported by the support SB.

Meanwhile, the swash plate SP rotates, and thus, friction may occur between the rotating swash plate SP and the support SB when the swash plate SP rotates. Accordingly, the bearing 100 needs to be installed between the swash plate SP and the support SB in order to reduce friction.

According to the present embodiment, threaded fixation blind holes FG are formed in the support SB at positions corresponding to the fixation holes FH. Accordingly, the bearing 100 may be fixedly installed on the support SB by fixation screws FS. For this reason, the contact portion 111 and the coupling portions 121 do not need to have fixation means for fixation to the support SB.

The fixation screws FS fix the bearing 100 to the support SB in both regions outside the contact surface CF. Accordingly, the fixation screws FS also serve to prevent the phenomenon in which the contact surface CF is pushed in the overall area of the contact surface CF where friction with the swash plate SP occurs. It is obvious that the phenomenon in which the contact surface CF is pushed is prevented by the internal cores IW as described above, but the pushing prevention function is further enhanced by the fixation screws FS.

In addition, the fixation holes FH have longitudinal hole shapes approximately perpendicular to the line that connects the two fixation holes FH. The longitudinal hole-shaped fixation holes FH allow the bearing 100 to be appropriately fixed and installed onto the support SB even when the dimensions of the support SB are somewhat different. As described above, the versatility of the bearing 100 is improved by forming the fixation holes FH in the form of longitudinal holes and not providing separate positioning protrusions PP on the support SB.

Meanwhile, the present invention basically has the following features: the second plate 120 is made of an aluminum material and formed to have a thin thickness; the bearing 100 is coupled to the support SB at both ends of the bearing 100 that do not come into contact with the swash plate SP; and the internal cores IW are provided in the first plate 110. Furthermore, these three main features may be applied to the bearing 100 individually or selectively, or may be applied to the bearing 100 together as in the above embodiment.

The above-described embodiments are only preferred examples of the present invention, and may have various application forms. Therefore, the present invention should not be understood as being limited to the content described above. Instead, the scope of the rights of the present invention should be understood based on the separately described claims and their equivalents.

## Claims

1. A bearing (100) for supporting a swash plate of a hydraulic static transmission that is coupled to a support (SB) adapted to support a swash plate (SP) applied to a hydraulic static transmission and is provided to reduce friction that occurs between the swash plate (SP) and the support (SB) when the swash plate (SP) rotates, the bearing (100) comprising:
a first plate (110) provided with a contact surface (CF) that comes into contact with a swash plate curved surface of the swash plate (SP) on one side thereof, and made of a synthetic resin material; and
a second plate (120) formed in a shape rounded to have a curvature, configured to be superimposed on the first plate (110) to come into close contact with a remaining surface of the first plate (110) and retain a shape of the first plate (110), and made of a metal material;
wherein the first plate (110) is made of a polytetrafluoroethylene material.

2. The bearing of claim 1, wherein the second plate (120) is made of an aluminum material.

3. The bearing of claim 1, wherein a thickness of the first plate (110) is 0.36 mm.

4. The bearing of claim 1, wherein a friction coefficient of the contact surface (CF) is 0.003 to 0.005.

5. The bearing of claim 4, wherein the friction coefficient of the contact surface (CF) has a value that makes a neutral return angle of the swash plate 0.8 to 1.5 degrees.

6. The bearing of claim 1, wherein:
the first plate (110) has internal cores (IW) positioned between the one surface and the remaining surface; and
the internal cores (IW) are made of a metal material.

7. The bearing of claim 6, wherein the internal cores (IW) are arranged in a mesh form.

8. The bearing of claim 1, wherein:
the first plate (110) comprises:
a contact portion (111) provided with the contact surface (CF); and
first fixation portions (112a, and 112b) configured to be bent at both ends of the contact portion (111) and then extend with the contact portion (111) interposed therebetween, and to be fixed to the support (SB);
the second plate (120) comprises:
a coupling portion (121) that is coupled to the contact portion (111); and
second fixation portions (122a, and 122b) configured to be bent at both ends of the coupling portion (121) and then extend with the coupling portion (121) interposed therebetween, and to be fixed to the support (SB) together with the first fixation portions (112a, and 112b);
wherein the first fixation portions (112a, and 112b) and the second fixation portions (122a, and 122b) do not come into contact with the swash plate (SP).

9. The bearing of claim 8, wherein fixation holes (FH) are formed in the first fixation portions (112a, and 112b) and the second fixation portions (122a, and 122b).

10. The bearing of claim 9, wherein the fixation holes (FH) are longitudinal holes.

11. The bearing of claim 8, wherein the contact portion (111) and the coupling portion (121) do not have fixation means for being fixed to the support (SB).

12. A bearing (100) for supporting a swash plate of a hydraulic static transmission that is coupled to a support (SB) adapted to support a swash plate (SP) applied to a hydraulic static transmission and is provided to reduce friction that occurs between the swash plate (SP) and the support (SB) when the swash plate (S) rotates, the bearing (100) comprising:
a first plate (110) provided with a contact surface (CF) that comes into contact with a swash plate curved surface of the swash plate (SP) on one side thereof, and made of a synthetic resin material; and
a second plate (120) formed in a shape rounded to have a curvature, configured to be superimposed on the first plate (110) to come into close contact with a remaining surface of the first plate (110) and retain a shape of the first plate (110), and made of a metal material;
wherein the first plate (110) has internal cores (IW) positioned between the one surface and the remaining surface.

13. The bearing of claim 12, wherein the internal cores (IW) are made of a metal material.

14. The bearing of claim 13, wherein the internal cores (IW) are made of a steel material.
